# EUROPEAN PATENT SPECIFICATION

(11) **EP 3 093 465 B1**
(45) Date of publication and mention of the grant of the patent: **19.06.2019**
(21) Application number: 14863748.1
(22) Date of filing: 21.11.2014
(51) Int. Cl.: F02B 29/04, F01N 3/24, F02D 45/00, F02M 26/00, F02M 35/10, F02D 41/22, F28F 17/00

(54) **CONTROL DEVICE FOR INTERNAL COMBUSTION ENGINE**
STEUERUNGSVORRICHTUNG FÜR VERBRENNUNGSMOTOR
DISPOSITIF DE COMMANDE POUR MOTEUR À COMBUSTION INTERNE

(30) Priority: 25.11.2013 JP 2013242842; 25.11.2013 JP 2013242845; 25.11.2013 JP 2013242849
(43) Date of publication of application: 16.11.2016
(73) Proprietor: Mitsubishi Jidosha Kogyo Kabushiki Kaisha, Tokyo 108-8410 (JP)
(72) Inventor: ISOBE, Yusuke, Tokyo 108-8410 (JP); KIMURA, Hiroyuki, Tokyo 108-8410 (JP)
(74) Representative: Vossius & Partner Patentanwälte Rechtsanwälte mbB
(86) International application number: PCT/JP2014/005864
(87) International publication number: WO 2015/075944

(56) References cited:
- EP-A2- 0 219 202
- DE-A1-102011 087 259
- JP-A- 2002 303 146
- JP-A- 2009 092 005
- JP-A- 2013 124 563
- JP-A- 2013 124 563
- US-A1- 2011 094 219
- US-A1- 2013 291 536

## Description

### Technical Field

The present invention relates to a control device that controls operation of an internal combustion engine for a vehicle.

### Background Art

EP 0 219 202 A2 describes an EGR diagnostic method and apparatus.

A known method of purifying exhaust gas of a diesel engine uses a NOx trap catalyst. The NOx trap catalyst traps NOx in exhaust in an oxidizing atmosphere and releases the trapped NOx in a reducing atmosphere so as to reduce the NOx to N₂ or the like. In this way, the NOx concentration in the exhaust is decreased. Furthermore, a filter device that removes particulate matter in the exhaust is provided in a vehicle equipped with a diesel engine, and the NOx trap catalyst is typically disposed downstream of the filter device from the viewpoints of heat resistance of the NOx trap catalyst and an arrangement space.

Furthermore, an exhaust gas recirculation (EGR) method is known. With this method, part of the exhaust is returned to the intake side so as to decrease the combustion temperature in a combustion chamber, thereby NOx in the exhaust is decreased. As the EGR method, there are a high-pressure EGR method and a low-pressure EGR method. With the high-pressure EGR method, the exhaust is returned from a portion of an exhaust passage upstream of a turbine of a supercharger to a portion of an intake passage downstream of a compressor. With the low-pressure EGR method, the exhaust is returned from a portion of the exhaust passage downstream of the turbine and downstream of an oxidation catalyst and the filter device to a portion of the intake passage upstream of the compressor. In the internal combustion engine that includes cooling means such as a low-pressure EGR device and an intercooler, intake air containing the exhaust condenses to condensation water when passing through the cooling means and being cooled. When this condensation water together with the intake air is fed from the intake passage to the combustion chamber, water hammer may be caused.

In order to solve the above-described problem, an internal combustion engine is disclosed, for example, in PTL 1. This internal combustion engine includes a storage tank in which condensation water produced by an intercooler is stored, a heating device that heats the condensation water to convert the water into water vapor, and a water vapor supply passage connected to the storage tank and a portion of an exhaust passage upstream of a catalyst. The internal combustion engine supplies water vapor to a portion of the exhaust passage upstream of the catalyst by converting the condensation water into the water vapor.

### Citation List

### Patent Literature

PTL 1: Japanese Unexamined Patent Application Publication No. 2013-124563

### Summary of Invention

### Technical Problem

Although a flow amount regulating valve is provided in a water vapor supply passage according to the above-described technique, it is only disclosed that control of an opening and closing operation of this flow amount regulating valve is performed by a control device, and the details of the opening and closing operation are not clarified. For the opening and closing operation, it is required that a setting value of a valve opening time period be long due to the difficulty in accurately obtaining the amount of water stored in the storage tank. Furthermore, when the valve opening time period is excessively long, intake gas is also discharged after the discharge of the water is completed. This causes a problem in that torque and output of the internal combustion engine decrease. However, when a failure of the valve occurs due to, for example, clogging with foreign matter or damage to the valve, there is a problem in that opening and closing control cannot be performed and a trouble occurs.

An object of the present invention is to provide a control device for an internal combustion engine with which the above-described problems are solved, so that decreases in torque and output can be prevented by appropriately controlling opening and closing operation of an on-off valve provided midway along the water drainage line and with which whether or not a failure of the on-off valve occurs is determined and a user can be notified of the failure of the on-off valve when the failure occurs.

### Solution to Problem

According to the invention, a control device for an internal combustion engine includes an intake passage, an exhaust passage, an intercooler, a catalyst, a water drainage line, an on-off valve, detection means, and an on-off valve control unit. The intake passage has one end connected to an intake side of an internal combustion engine. The exhaust passage has one end connected to an exhaust side of the internal combustion engine. The intercooler is disposed in the intake passage. The catalyst is provided in the exhaust passage. The water drainage line has one end connected to a portion of the intake passage downstream of the intercooler, has another end connected to a portion of the exhaust passage upstream of the catalyst, and allows condensation water condensed by the intercooler to be discharged therethrough to the exhaust passage. The on-off valve is provided midway along the water drainage line. The detection means is provided in at least one of the intake passage and the exhaust passage and detects at least one of a state of intake air and a state of exhaust. The on-off valve control unit performs opening and closing control of the on-off valve in accordance with output of the detection means.

Further according to the invention, the control device for an internal combustion engine further includes a failure determination control unit that performs failure determination of the on-off valve in accordance with a change in the state of the intake air or a change in the state of the exhaust detected by the detection means. In this control device for an internal combustion engine, when opening control of the on-off valve is performed while the on-off valve is closed, the failure
determination control unit determines that the on-off valve is stuck closed in the case where the state of the intake air or the state of the exhaust detected by the detection means is not changed after a specified period of time has elapsed.

Further according to the invention, the control device for an internal combustion engine further includes an exhaust gas recirculation device that is connected to the exhaust passage and the intake passage and that returns part of the exhaust to the intake passage and an exhaust gas recirculation control unit that controls a flow amount of the exhaust of the exhaust gas recirculation device. In this control device for an internal combustion engine, the exhaust gas recirculation device returns the part of the exhaust to a portion of the intake passage upstream of the intercooler from a portion of the exhaust passage between an exhaust filter provided in the exhaust passage and a connecting position of the water drainage line. In this control device for an internal combustion engine, the exhaust gas recirculation control unit causes the flow amount of the exhaust to decrease when the failure determination control unit determines that the on-off valve is stuck closed.

Preferably, in the control device for an internal combustion engine, when closing control of the on-off valve is performed while the on-off valve is open, the failure determination control unit determines that the on-off valve is stuck open in the case where the state of the intake air or the state of the exhaust detected by the detection means is not changed.

Preferably, the control device for an internal combustion engine further includes a supercharger provided upstream of the intercooler in the intake passage and a supercharger control unit that controls a flow amount of the intake air of the supercharger. In this control device for an internal combustion engine, the supercharger control unit causes the flow amount of the intake air to decrease when the failure determination control unit determines the on-off valve is stuck open.

In an example of a control device for an internal combustion engine, the detection means is an oxygen concentration sensor provided in a portion of the exhaust passage downstream of a connecting portion where the water drainage line is connected to the exhaust passage. In this control device for an internal combustion engine, the on-off valve control unit performs opening control of the on-off valve when the condensation water is discharged. In this control device for an internal combustion engine, the on-off valve control unit performs closing control of the on-off valve when an oxygen concentration detected by the oxygen concentration sensor is changed to a lean side.

In another example of a control device for an internal combustion engine, the catalyst is provided between the oxygen concentration sensor and a connecting position where the water drainage line is connected to the exhaust passage.

In another example of a control device for an internal combustion engine, the detection means is a temperature sensor that is provided near the catalyst and that measures a temperature in the exhaust passage. In this control device for an internal combustion engine, the on-off valve control unit performs closing control of the on-off valve while the on-off valve is open in the case where an exhaust temperature detected by the temperature sensor is increased.

In another example of a control device for an internal combustion engine, the temperature sensor is provided at a position upstream of the catalyst where the temperature sensor becomes wet with the condensation water discharged from the water drainage line.

In another example of a control device for an internal combustion engine, the detection means is a pressure detection means disposed in the intake passage. Advantageous Effects of Invention

According to the present invention, the valve closing control of the on-off valve can be performed at appropriate timing at which the condensation water has been drained from the water drainage line. Thus, discharge of the intake gas can be prevented after the discharge of the condensation water from the water drainage line is completed. This can reliably prevent torque and output of the internal combustion engine from decreasing.

### Brief Description of Drawings

Fig. 1 is a schematic view of a water drainage control unit for an internal combustion engine to which a first example is applied.
Fig. 2 is a block diagram of a control unit used in the first example.
Fig. 3 is a flowchart illustrating operation of the water drainage control unit according to the first example.
Fig. 4 is a diagram illustrating changes in detection value of an oxygen concentration sensor according to the first example.
Fig. 5 is a diagram illustrating changes in detection value of the oxygen concentration sensor when valve opening control is performed according to a second example.
Fig. 6 is a diagram illustrating changes in detection value of the oxygen concentration sensor when valve closing control is performed according to the second example.
Fig. 7 is a flowchart illustrating operation of a water drainage control unit according to the second example.
Fig. 8 is a schematic view of the water drainage control unit for an internal combustion engine to which a variant of the first or second example.
Fig. 9 is a schematic view of a water drainage control unit for an internal combustion engine to which a third example is applied.
Fig. 10 is a block diagram of a control unit used in the third example.
Fig. 11 is a flowchart illustrating operation of the water drainage control unit according to the third example.
Fig. 12 is a diagram illustrating changes in detection value of a temperature sensor according to the third example.
Fig. 13 is a diagram illustrating changes in detection value of the temperature sensor when the valve opening control is performed according to a fourth example.
Fig. 14 is a diagram illustrating changes in detection value of the temperature sensor when the valve closing control is performed according to the fourth example.
Fig. 15 is a flowchart illustrating operation of a water drainage control unit according to the fourth example.
Fig. 16 is a schematic view of a control unit for an internal combustion engine to which an embodiment of the present invention is applied.
Fig. 17 is a block.diagram of a control unit used in the embodiment of the present invention.
Fig. 18 is a diagram illustrating changes in detection value of a boost sensor when the valve opening control is performed according to the embodiment of the present invention.
Fig. 19 is a diagram illustrating changes in detection value of the boost sensor when the valve closing control is performed according to the embodiment of the present invention.
Fig. 20 is a flowchart illustrating operation of a control unit according to the embodiment of the present invention.

### Description of Embodiments

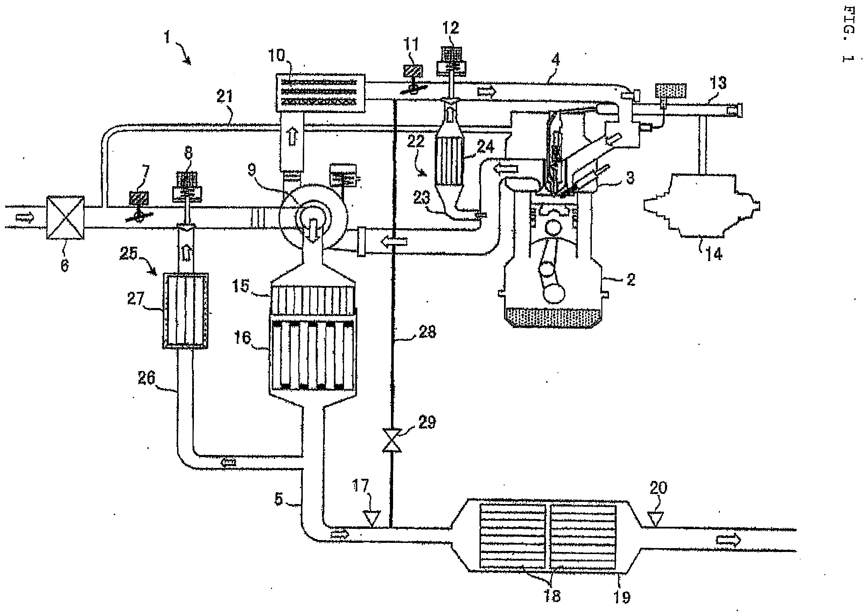

Referring to Fig. 1 that illustrates a first example, a cylinder head 3 is provided on an upper side of a cylinder block 2 in an onboard diesel engine 1 (referred to as "engine" hereafter) serving as an internal combustion engine. An intake pipe 4 serving as an intake passage and an exhaust pipe 5 serving as an exhaust passage are connected to the cylinder head 3 on an intake side and on an exhaust side, respectively. A fuel injection pump 14 is also connected to the cylinder head 3 through a common rail 13. Furthermore, a blow-by gas passage 21, one end of which is connected to the intake pipe 4 downstream of an air filter 6 in an intake flow direction, has another end connected to the cylinder head 3. A blow-by gas is discharged through the blow-by gas passage 21.

Components such as the following components are provided to the intake pipe 4 in this order from the upstream side in the intake flow direction: the air filter 6, a low-pressure throttle valve 7, a low-pressure EGR valve 8, a compressor (not illustrated) of a turbocharger 9 serving as a supercharger, an intercooler 10, a high-pressure throttle valve 11, and a high-pressure EGR valve 12.

The exhaust pipe 5 is provided with, in this order from the cylinder block 2 side, a turbine (not illustrated) of the turbocharger 9, an oxidation catalyst 15, and a filter device 16 serving as an exhaust filter. The oxidation catalyst 15 carries a noble metal catalyst such as, for example, platinum and has an effect of converting NO in exhaust into NO₂ and an effect of oxidizing hazardous components in the exhaust such as HC and CO. NO₂, which has a stronger oxidizing effect than NO, facilitates an oxidizing reaction of particulate matter having been trapped by the filter device 16 and is reduced by a NOx trap catalyst, which will be described later. The filter device 16 traps the particular matter in the exhaust. The trapped particulate matter is removed by burning by using the strong oxidizing effect of NO₂.

An oxygen concentration sensor (LAFS) 17 that detects the oxygen concentration in the exhaust is provided downstream of the filter device 16 in an exhaust flow direction. A catalyst converter 19 containing a NOx trap catalyst 18 as a catalyst is disposed downstream of the oxygen concentration sensor 17, and an oxygen concentration sensor 20 serving as a detection means is provided downstream of the catalyst converter 19. The NOx trap catalyst 18 is a purifying device that traps NOx in an oxidizing atmosphere and releases the trapped NOx in a reducing atmosphere containing, for example, HC, CO, and the like so as to reduce NOx to N₂ or the like. That is, NO₂ generated by the oxidation catalyst 15 and NO not oxidized by the oxidation catalyst 15 and remaining in the exhaust gas are trapped, reduced to N₂ or the like, and released.

A high-pressure EGR device 22 that includes a high-pressure EGR pipe 23 and a high-pressure EGR cooler 24 is disposed below the high-pressure EGR valve 12. One end of the high-pressure EGR pipe 23 is connected to a portion of the intake pipe 4 between the high-pressure throttle valve 11 and the cylinder head 3, and another end of the high-pressure EGR pipe 23 is connected to a portion of the exhaust pipe 5 between the cylinder head 3 and the turbine of the turbocharger 9. The high-pressure EGR cooler 24 is disposed between the one and the other ends of the high-pressure EGR pipe 23. The one end of the high-pressure EGR pipe 23 is opened and closed by the high-pressure EGR valve 12.

A low-pressure EGR device 25 that includes a low-pressure EGR pipe 26 and a low-pressure EGR cooler 27 is disposed below the low-pressure EGR valve 8. The low-pressure EGR device 25 serves as an exhaust gas recirculation device. One end of the low-pressure EGR pipe 26 is connected to a portion of the intake pipe 4 between the low-pressure throttle valve 7 and the compressor of the turbocharger 9, and another end of the low-pressure EGR pipe 26 is connected to a portion of the exhaust pipe 5 between the filter device 16 and the NOx trap catalyst 18. The low-pressure EGR cooler 27 is disposed between the one and the other ends the low-pressure EGR pipe 26. The one end of the low-pressure EGR pipe 26 is opened and closed by the low-pressure EGR valve 8.

One end of a water drainage pipe 28 is connected to a portion of the intake pipe 4 between the intercooler 10 and the high-pressure throttle valve 11. Another end of the water drainage pipe 28 is connected to a portion of the exhaust pipe 5 positioned near the NOx trap catalyst 18 on the upstream side of the NOx trap catalyst 18. The water drainage pipe 28 forms a water drainage line. An on-off valve 29 is disposed midway along the water drainage pipe 28.

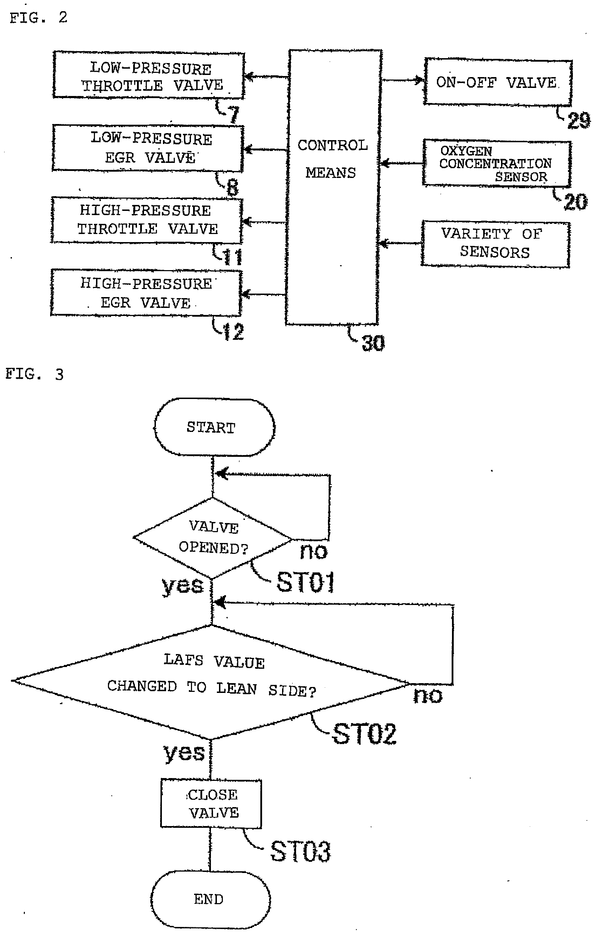

Fig. 2 is a block diagram of a control means 30 that functions as an on-off valve control unit of the engine 1 used in the first example. The control means 30 includes a known microcomputer including, for example, a CPU, a ROM, and a RAM which are not illustrated. The control means 30 controls operations of the throttle valves 7 and 11, the EGR valves 8 and 12, and the on-off valve 29 in accordance with detection signals from a variety of sensors including the oxygen concentration sensor 20.

With the above-described structure, the exhaust discharged from the cylinder head 3 rotates the turbine of the turbocharger 9, and at the same time, rotates the compressor of the turbocharger 9 so as to suck intake air into the intake pipe 4. Detection values of the sensors are input to the control means 30, thereby the operations of the throttle valves 7 and 11, the EGR valves 8 and 12, and the on-off valve 29 are controlled. During drive of the engine 1, NO in the exhaust discharged from the cylinder head 3 is converted into NO₂ by the oxidation catalyst 15, and the particulate matter trapped by the filter device 16 is removed by burning due to the oxidizing effect of the NO₂. NOx adsorbed by the NOx trap catalyst 18 is reduced and made harmless in the catalyst converter 19 disposed downstream of the oxidation catalyst 15 and the filter device 16.

Furthermore, by opening the high-pressure EGR valve 12, part of the exhaust flowing through a portion of the exhaust pipe 5 upstream of the turbocharger 9 is introduced into the high-pressure EGR pipe 23. The exhaust gas having been introduced into the high-pressure EGR pipe 23 is cooled by the high-pressure EGR cooler 24 and supplied to a portion of the intake pipe 4 downstream of the intercooler 10. Also, by opening the low-pressure EGR valve 8, part of the exhaust gas flowing through a portion of the exhaust pipe 5 downstream of the filter device 16 is introduced into the low-pressure EGR pipe 26. The exhaust gas having been introduced into the low-pressure EGR pipe 26 is cooled by the low-pressure EGR cooler 27 and supplied to a portion of the intake pipe 4 upstream of the turbocharger 9.

By returning part of the exhaust gas to the intake air by the high-pressure EGR device 22 and the low-pressure EGR device 25, the combustion temperature in a combustion chamber of the engine 1 can be decreased so as to decrease the amount of discharge of NOx. The high-pressure EGR device 22 circulates part of the exhaust gas on the upstream side of the turbocharger 9. Accordingly, in a drive state in which sufficient supercharging by the turbocharger 9 is required (drive state in which a certain amount of air is required to be ensured), the low-pressure EGR device 25 is used to decrease the discharge amount of NOx. That is, a range where a load (torque) is low and the rotational speed of an engine is low is a high-pressure EGR range where the high-pressure EGR device 22 is used. In contrast, a range where the load is higher than that in the high-pressure EGR range and the rotational speed of the engine is high is a low-pressure EGR range (drive range in which a certain amount of air is required to be ensured) where the low-pressure EGR device 25 is used.

During drive of the engine 1, in particular when the low-pressure EGR device 25 is used, a large amount of condensation water is produced at an exit of the intercooler 10. The produced condensation water is fed to the portion of the exhaust pipe 5 positioned near the NOx trap catalyst 18 on the upstream side of the NOx trap catalyst 18 through the water drainage pipe 28 and discharged to the outside of a vehicle through the catalyst converter 19. However, when the on-off valve 29 disposed midway along the water drainage pipe 28 is closed, the condensation water is stored in the water drainage pipe 28. The on-off valve 29 is opened when the amount of the stored condensation water has reached a certain amount in accordance with a water level sensor (not illustrated) provided in the water drainage pipe 28 or when the travel distance or a period of drive time of the engine 1 has reached a certain value. In this way, the condensation water in the water drainage pipe 28 is discharged to the outside of the vehicle through the catalyst converter 19.

Here, when a period of valve opening time of the on-off valve 29 is excessively long, intake gas is also discharged after the discharge of the condensation water from the water drainage pipe 28 is completed. This causes torque and output of the internal combustion engine to decrease. Thus, according to the first example, closing of the on-off valve 29 is appropriately controlled. This valve closing control is described below.

Fig. 3 is a flowchart illustrating an opening and closing control operation of the on-off valve 29 performed by the control means 30. As described above, the control means 30 initially determines whether or not the amount of the stored condensation water has reached a certain amount by using the water level sensor (not illustrated) provided in the water drainage pipe 28 or whether or not the period of drive time or the travel distance of the engine 1 has reached a certain value. If the certain amount or the certain value has been reached, the on-off valve 29 is opened (ST01).

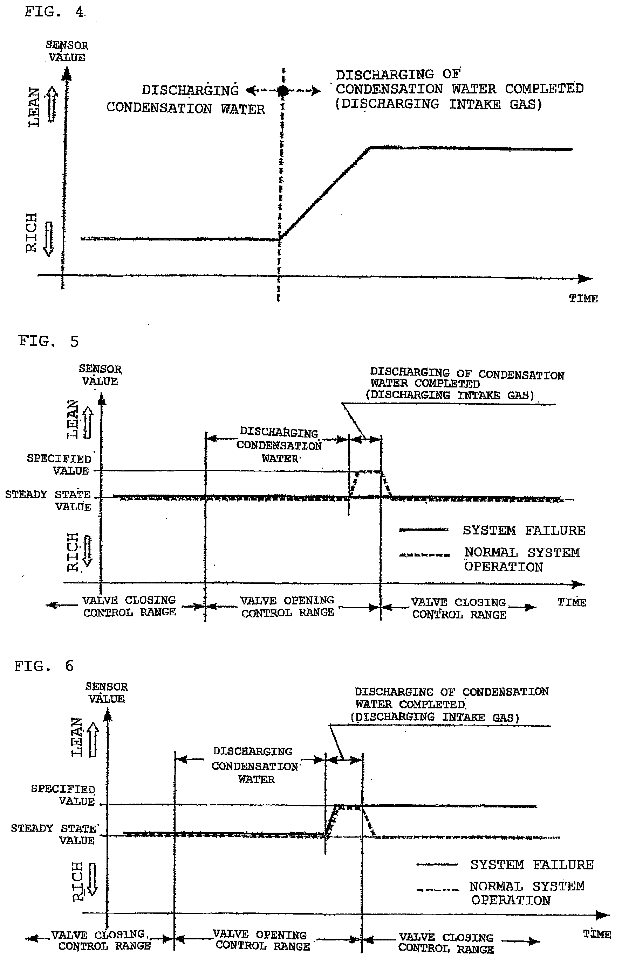

If the opening of the on-off valve 29 is confirmed, then the control means 30 checks an output value of the oxygen concentration sensor 20 (ST02). Here, while the condensation water is being discharged through the water drainage pipe 28, the oxygen concentration sensor 20 cannot detect oxygen contained in the intake gas due to the condensation water. Thus, as illustrated in Fig. 4, the output value is positioned on a rich side representing a state in which the oxygen concentration in the gas is lower than a theoretical air-fuel ratio and a fuel component is large. Then, when the condensation water is drained from the water drainage pipe 28 and the oxygen concentration sensor 20 detects the oxygen contained in the intake gas gradually leaking through the water drainage pipe 28, the output value is changed to a lean side representing a state in which the oxygen concentration in the gas is higher than a theoretical air-fuel ratio and the fuel component is small. Then, when the condensation water has been completely drained and a specified period of time has elapsed, the output value is stabilized as a specified value on the lean side. Thus, the control means 30 determines that the condensation water has been completely drained from the water drainage pipe 28 and causes the on-off valve 29 to close (ST03). At this time, the oxygen concentration sensor 20 functions as the detection means that detects whether or not the condensation water has been discharged from the water drainage pipe 28. Here, the oxygen concentration during the discharge of the condensation water through the water drainage pipe 28 and the oxygen concentration when the on-off valve 29 is closed are substantially the same value. Compared to this oxygen concentration, the value detected by the oxygen concentration sensor 20 when the condensation water has been drained from the water drainage pipe 28 is on the relatively lean side.

With the above-described structure, the valve closing control of the on-off valve 29 can be performed at appropriate timing at which the condensation water has been drained from the water drainage pipe 28. Thus, after the discharge of the condensation water from the water drainage pipe 28 is completed, discharge of the intake gas can be prevented. This can reliably prevent torque and output of the engine 1 from decreasing.

Next, a second example is described. According to the first example, opening and closing control of the on-off valve 29 provided in the water drainage pipe 28 is performed by the control means 30. However, when a failure of the on-off valve 29 occurs due to, for example, clogging with foreign matter or damage to the on-off valve 29, the opening and closing control by the control means 30 cannot be performed and a trouble occurs. Here, failure determination control that determines whether or not a failure of the on-off valve 29 occurs is described below as the second example.

When a valve opening instruction is transmitted by the control means 30 while the on-off valve 29 is closed, the on-off valve 29 is opened and the condensation water is discharged through the water drainage pipe 28. When the condensation water has been completely drained from the water drainage pipe 28 after the specified period of time has elapsed, the oxygen concentration sensor 20 indicates the lean side due to detection of the exhaust gas with the intake air. When a valve closing instruction is transmitted from the control means 30, since the oxygen concentration sensor 20 detects the exhaust gas without the intake air due to closing of the valve, a detection value of the oxygen concentration sensor 20 is changed to the rich side and returned to a steady state value. However, when the on-off valve 29 is stuck closed for some reason, that is, the on-off valve 29 is not released from the closed state, as represented by a solid line of Fig. 5, the detection value of the oxygen concentration sensor 20 is not changed from the steady state value even after the specified period of time has been elapsed.

When the valve closing instruction is transmitted by the control means 30 while the on-off valve 29 is open, the outflow of the exhaust gas with the intake air is stopped due to the closing of the valve. Thus, as represented by a broken line of Fig. 6, the exhaust gas without the intake air is detected by the oxygen concentration sensor 20. Thus, the detection value of the oxygen concentration sensor 20 is changed to the rich side and returned to the steady state value. However, when the on-off valve 29 is stuck open for some reason, that is, the on-off valve 29 in the open state is not closed, as represented by a solid line of Fig. 6, the detection value of the oxygen concentration sensor 20 is not returned from the specified value to the steady state value.

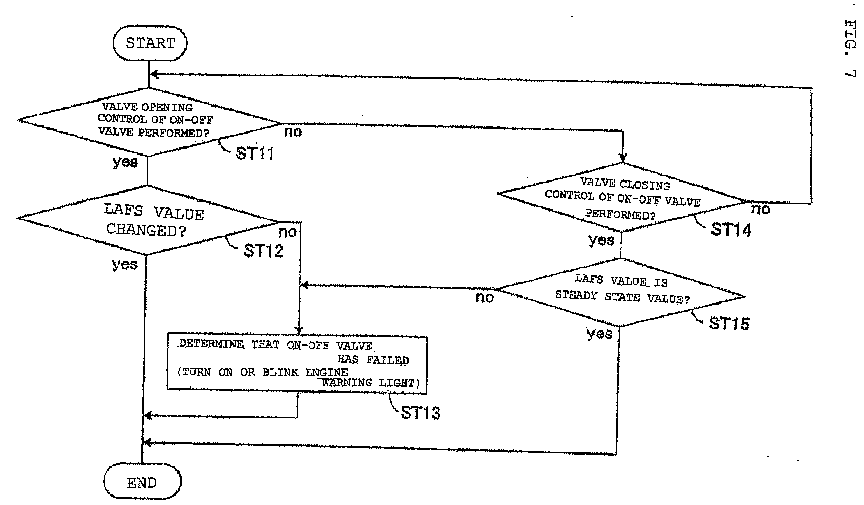

A control operation according to the above-described second example is described with reference to a flowchart of Fig. 7. Initially, whether or not valve opening control of the on-off valve 29 has been performed is determined by the control means 30 (ST11). If it is determined that the valve opening control has been performed, then whether or not the detection value of the oxygen concentration sensor 20 has been changed is determined (ST12). If it is determined that the detection value of the oxygen concentration sensor 20 has been changed, it is recognized as normal and the control operation ends. If it is determined that the detection value has not been changed, then it is determined that a failure of the on-off valve 29 occurs, and an engine warning light is caused to turn on or blink so as to warn the driver about the occurrence of the failure (ST13).

Furthermore, if it is determined that the valve opening control has not been performed in step ST11, then whether or not the valve closing control has been performed is determined by the control means 30 (ST14). If it is determined that the valve closing control has been performed, then whether or not the detection value of the oxygen concentration sensor 20 is the steady state value is determined (ST15). If it is determined that the detection value of the oxygen concentration sensor 20 is the steady state value, it is recognized as normal and the control operation ends. If it is determined that the detection value of the oxygen concentration sensor 20 has not been changed from the specified value to the steady state value, then processing advances to step ST13. In step ST13, it is determined that a failure of the on-off valve 29 occurs, and the engine warning light is caused to turn on or blink so as to warn the driver about the occurrence of the failure.

According to the present second example, the control means 30 functions as a first failure determination control unit. With this structure, failure determination of the on-off valve 29 can be performed without providing an additional sensor. Accordingly, the failure determination of a water drainage control device can be correctly performed without increasing the cost.

According to the above-described example, the NOx trap catalyst 18 is provided between the oxygen concentration sensor 20 and a position where the water drainage pipe 28 is connected to the exhaust pipe 5. Thus, the oxygen concentration sensor 20 can be provided at a position where the oxygen concentration sensor 20 does not become wet with the condensation water. This can prevents a sensor failure. Furthermore, the low-pressure EGR device 25 returns part of the exhaust from a portion of the exhaust pipe 5 between the filter device 16 and a water drainage line connecting position to a portion of the intake pipe 4 upstream of the turbocharger 9. Thus, the returned exhaust which has passed through the filter device 16 contains a small amount of impurities. This can prevent combustion efficiency of the engine 1 from decreasing.

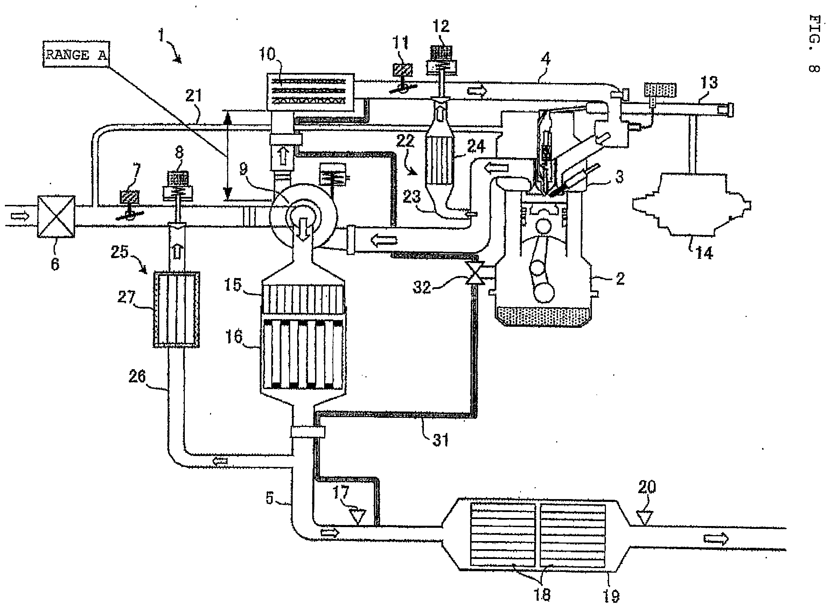

Fig. 8 is a variant of the above-described first or second example. Compared to the example of Fig. 1, only the difference between the example of Fig. 1 and the variant is that a water drainage pipe 31 serving as the water drainage line and an on-off valve 32 are used according to the variant instead of the water drainage pipe 28 and the on-off valve 29. Other elements are the same.

Both ends of the water drainage pipe 31 are connected to the same positions as the positions where the water drainage pipe 28 is connected. The water drainage pipe 31 has bent portions midway along it. The bent portions are in contact with a range of the intake pipe 4 between the turbocharger 9 and the intercooler 10 (range A) and a portion of the exhaust pipe 5 between the filter 16 and the oxygen concentration sensor 17. The on-off valve 32 is positioned near the cylinder block 2. After warm-up of the engine 1 has been performed, the temperature of the range A becomes a comparatively high temperature of 35 to 170°C.

With the above-described structure, after the warm-up of the engine 1 has been performed, portions where the water drainage pipe 31 and the on-off valve 32 are disposed are warmed. Thus, the condensation water in the water drainage pipe 31, the on-off valve 32, and the valves 8 and 12 is heated. This can prevent blockage of the intake pipe 4, the exhaust pipe 5, and the water drainage pipe 31 due to freezing of the condensation water and prevent freezing of the on-off valve 32 in, for example, cold climate areas. Accordingly, a good drive state can be continued.

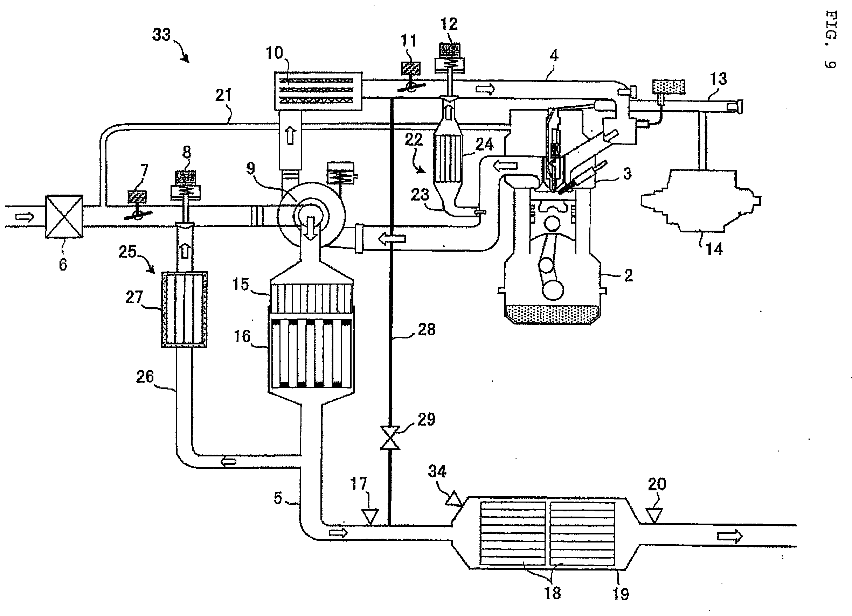

Fig. 9 is a third example. Referring to Fig. 9, compared to the engine 1 of the first example, only the difference between an engine 33 serving as the internal combustion engine and the engine 1 is that the engine 33 includes a temperature sensor 34 serving as a detection means that detects the temperature in the exhaust pipe 5. The temperature sensor 34 is disposed near a position upstream of the NOx trap catalyst 18. Other elements are the same as those of the first example.

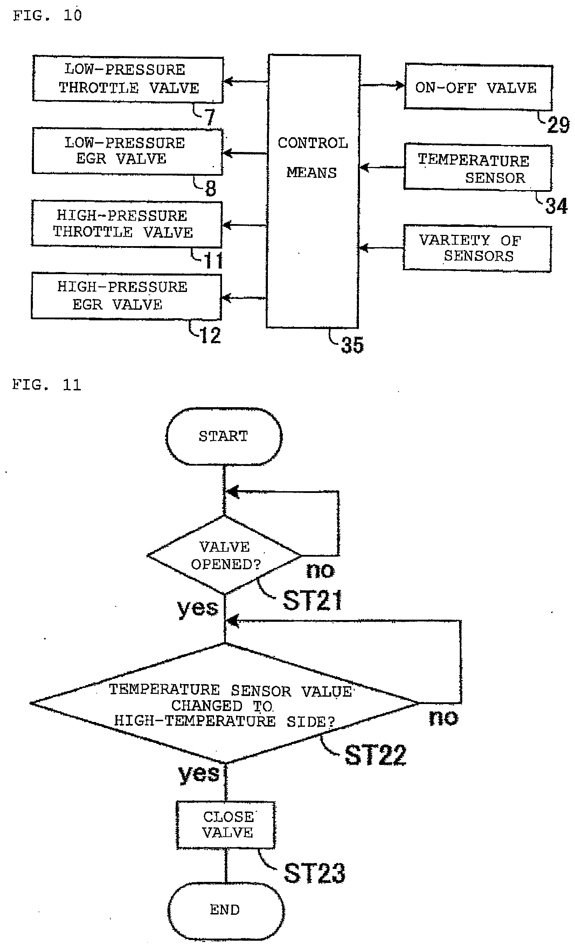

Fig. 10 is a block diagram of a control means 35 that functions as an on-off valve control unit of the engine 33 used in the third example. The control means 35 includes a known microcomputer including, for example, a CPU, a ROM, and a RAM which are not illustrated. The control means 35 controls operations of the throttle valves 7 and 11, the EGR valves 8 and 12, and the on-off valve 29 in accordance with detection signals from a variety of sensors including the temperature sensor 34.

During drive of the engine 33, in particular when the low-pressure EGR device 25 is used, a large amount of condensation water is produced at the exit of the intercooler 10. The produced condensation water is fed to the portion of the exhaust pipe 5 positioned near the NOx trap catalyst 18 on the upstream side of the NOx trap catalyst 18 through the water drainage pipe 28 and discharged to the outside of the vehicle through the catalyst converter 19. When the on-off valve 29 disposed midway along the water drainage pipe 28 is closed, the condensation water is stored in the water drainage pipe 28. The on-off valve 29 is opened when the amount of the stored condensation water has reached a certain amount in accordance with the water level sensor (not illustrated) provided in the water drainage pipe 28 or when the travel distance or a period of drive time of the engine 33 has reached a certain value. In this way, the condensation water in the water drainage pipe 28 is discharged to the outside of the vehicle through the catalyst converter 19.

Here, when a period of the valve opening time of the on-off valve 29 is excessively long, intake gas is also discharged after the discharge of the condensation water from the water drainage pipe 28 is completed. This causes torque and output of the internal combustion engine to decrease. Thus, according to the third example, closing of the on-off valve 29 is appropriately controlled. This valve closing control is described below.

Fig. 11 is a flowchart illustrating an opening and closing control operation of the on-off valve 29 performed by the control means 35. As described above, the control means 35 initially determines whether or not the amount of the stored condensation water has reached a certain amount by using the water level sensor (not illustrated) provided in the water drainage pipe 28 or whether or not the period of drive time or the travel distance of the engine 33 has reached a certain value. If the above-described certain amount or the above-described certain value has been reached, the control means 35 opens the on-off valve 29 (ST21).

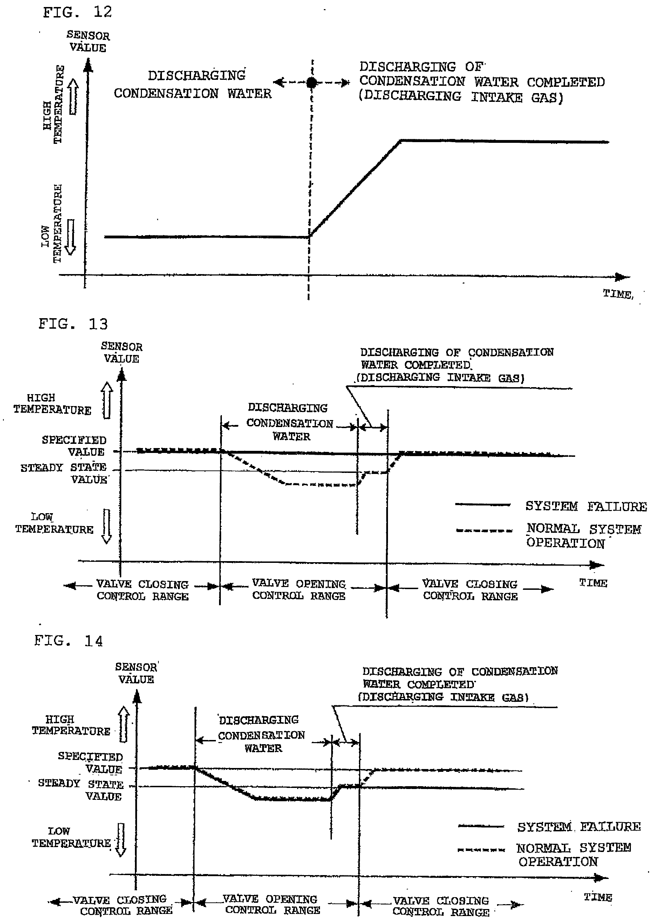

If the opening of the on-off valve 29 is confirmed, then the control means 35 checks an output value of the temperature sensor 34 (ST22). Here, when the condensation water remains in the water drainage pipe 28, the temperature in the exhaust pipe 5 detected by the temperature sensor 34 is positioned on a low-temperature side as illustrated in Fig. 12 due to the effect of vaporization heat of the condensation water vaporizing in the exhaust pipe 5 or the effect of the condensation water contacting the temperature sensor 34. When the condensation water has been completely drained, the temperature sensor 34 detects the intake gas and the exhaust gas leaking to the exhaust pipe 5 through the water drainage pipe 28, and accordingly, the output value is changed to a high-temperature side. Thus, the control means 35 determines that the condensation water has been completely drained from the water drainage pipe 28 and causes the on-off valve 29 to close (ST23). At this time, the temperature sensor 34 functions as a detection means that detects whether or not the condensation water has been discharged from the water drainage pipe 28.

Here, it is assumed that T1 is the temperature when the on-off valve 29 is closed, T2 is the temperature when the on-off valve 29 is open and the condensation water is being discharged through the water drainage pipe 28, and T3 is the temperature when the on-off valve 29 is open and the intake gas is leaking to the exhaust pipe 5 through the water drainage pipe 28. When the on-off valve 29 is closed, the temperature sensor 34 detects only the temperature of the exhaust gas in the exhaust pipe 5. Thus, the value of T1 is equal to the temperature of the exhaust gas in the exhaust pipe 5. When the on-off valve 29 is open and the condensation water is being discharged, the temperature sensor 34 is affected by the condensation water with which the temperature sensor 34 is directly wet and vaporization heat of the condensation water vaporizing in the exhaust pipe 5. Thus, T2 is the temperature of the exhaust gas decreased by the condensation water. After that, when the discharge of the condensation water is completed and the intake gas is leaking to the exhaust pipe 5, the temperature of the exhaust gas in the exhaust pipe 5 and the temperature of the leaking intake gas are detected by the temperature sensor 34. Thus, the value of T3 is the temperature of the exhaust gas decreased by the intake gas. That is, the relationship between the temperatures detected by the temperature sensor 34 is given as follows: T1 > T3 > T2.

With the above-described structure, the valve closing control of the on-off valve 29 can be performed at appropriate timing at which the condensation water has been drained from the water drainage pipe 28. Thus, after the discharge of the condensation water from the water drainage pipe 28 is completed, discharge of the intake gas can be prevented. This can reliably prevent torque and output of the engine 33 from decreasing.

Next, a fourth example is described. According to the third example, the opening and closing control of the on-off valve 29 provided in the water drainage pipe 28 is performed by the control means 35. However, when a failure of the on-off valve 29 occurs due to, for example, clogging with foreign matter or damage to the on-off valve 29, the opening and closing control by the control means 35 cannot be performed and a trouble occurs. Here, failure determination control that determines whether or not a failure of the on-off valve 29 occurs is described below as the fourth example.

When the valve opening instruction is transmitted by the control means 35 while the on-off valve 29 is closed, the water temperature is detected due to the outflow of the condensation water caused by the opening of the valve. Thus, as represented by a broken line of Fig. 13, a detection value of the temperature sensor 34 is changed from a steady state value to the low-temperature side. The detection value of the temperature sensor 34 indicates a specified value representing the temperature of the exhaust gas with the intake air when the condensation water has been completely drained from the water drainage pipe 28 after the specified period of time has elapsed. When the valve closing instruction is transmitted from the control means 35, the temperature sensor 34 detects the temperature of the exhaust gas without the intake air due to the closing of the valve. Thus, the detection value of the temperature sensor 34 is changed to the high-temperature side and returned to the steady state value. However, when the on-off valve 29 is stuck closed for some reason, that is, the on-off valve 29 is not released from the closed state, as represented by a solid line of Fig. 13, the detection value of the temperature sensor 31 is not changed from the steady state value even after the specified period of time has been elapsed.

When the valve closing instruction is transmitted by the control means 35 while the on-off valve 29 is open, the outflow of the exhaust gas with the intake air is stopped due to the closing of the valve. Thus, as represented by a broken line of Fig. 14, the temperature of the exhaust gas without the intake air is detected by the temperature sensor 34. Thus, the detection value of the temperature sensor 34 is changed to the high-temperature side and returned to the steady state value. However, when the on-off valve 29 is stuck open for some reason, that is, the on-off valve 29 in the open state is not closed, as represented by a solid line of Fig. 14, the detection value of the temperature sensor 34 is not returned from the specified value to the steady state value.

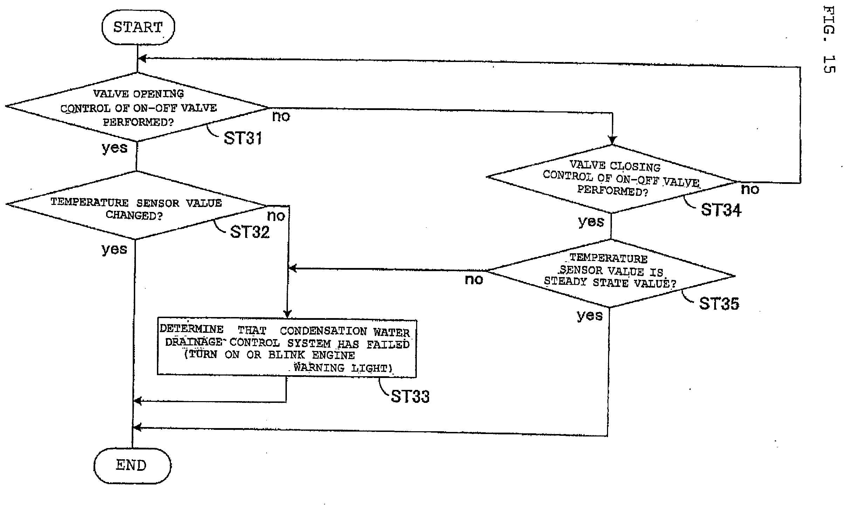

A control operation according to the above-described fourth example is described with reference to a flowchart of Fig. 15. Initially, whether or not the valve opening control of the on-off valve 29 has been performed is determined by the control means 35 (ST31). If it is determined that the valve opening control has been performed, then whether or not the detection value of the temperature sensor 34 has been changed is determined (ST32). If it is determined that the detection value of the temperature sensor 34 has been changed, it is recognized as normal and the control operation ends. If it is determined that the detection value has not been changed, then it is determined that a failure of the on-off valve 29 occurs, and the engine warning light is caused to turn on or blink so as to warn the driver about the occurrence of the failure (ST33).

Furthermore, if it is determined that the valve opening control has not been performed in step ST31, then whether or not the valve closing control has been performed is determined by the control means 35 (ST34). If it is determined that the valve closing control has been performed, then whether or not the detection value of the temperature sensor 34 is the steady state value is determined (ST35). If it is determined that the detection value of the temperature sensor 34 is the steady state value, it is recognized as normal and the control operation ends. If it is determined that the detection value of the temperature sensor 34 has not been changed from the specified value to the steady state value, then processing advances to step ST33. At step ST33, it is determined that a failure of the on-off valve 29 occurs, and the engine warning light is caused to turn on or blink so as to warn the driver about the occurrence of the failure.

According to the present fourth example, the control means 35 functions as a second failure determination control unit. With this structure, failure determination of the on-off valve 29 can be performed without providing an additional sensor. Accordingly, the failure determination of the water drainage control device can be correctly performed without increasing the cost.

According to the above-described examples, the temperature sensor 34 is provided at the position upstream of the NOx trap catalyst 18 where the temperature sensor 34 becomes wet with the condensation water discharged from the water drainage pipe 28. Thus, the water temperature of the discharged condensation water can be reliably detected, and accordingly, detection accuracy can be improved. Furthermore, the low-pressure EGR device 25 returns part of the exhaust from the portion of the exhaust pipe 5 between the DPF filter device 16 and the water drainage line connecting position to the portion of the intake pipe 4 upstream of the turbocharger 9. Thus, the returned exhaust which has passed through the DPF filter device 16 contains a small amount of impurities. This can prevent combustion efficiency of the engine 1 from decreasing.

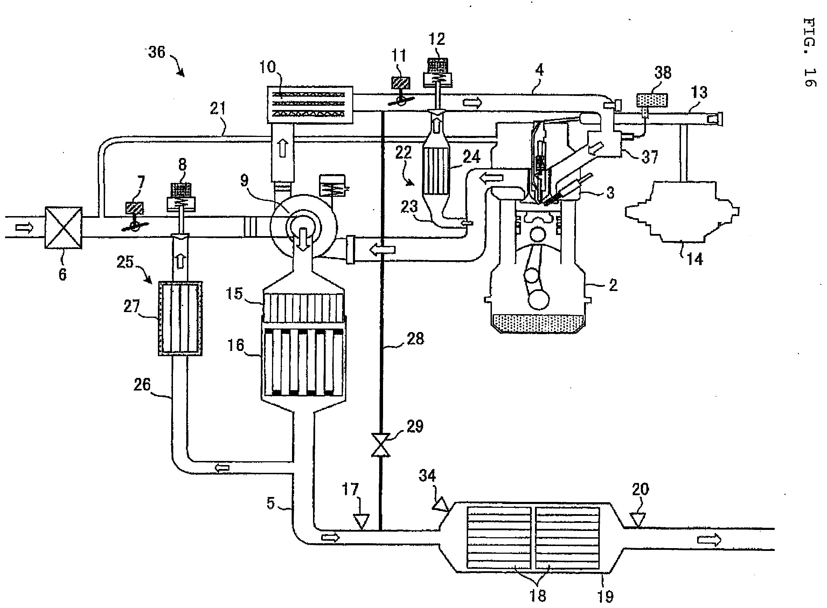

Fig. 16 is an embodiment of the present invention. Referring to Fig. 16, compared to the engine 33 of the third example, only the difference between an engine 36 serving as the internal combustion engine and the engine 33 is that the engine 36 includes a boost sensor 38 serving as a pressure detection means that is a detection means detecting an internal pressure. The boost sensor 38 is disposed at an intake manifold 37 provided between an intake port of the cylinder head 3 and the intake pipe 4. Other elements are the same as those of the third example.

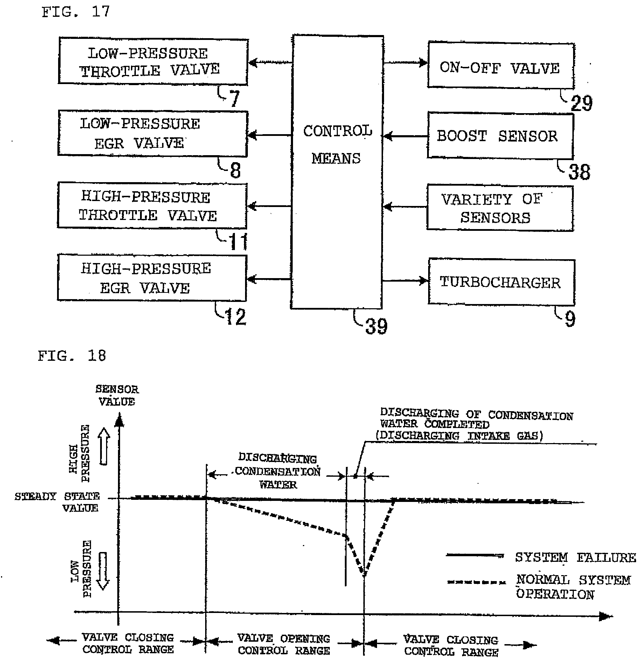

Fig. 17 is a block diagram of a control means 39 that functions as an on-off valve control unit of the engine 36 used in the embodiment of the present invention. The control means 39 includes a known microcomputer including, for example, a CPU, a ROM, and a RAM which are not illustrated. The control means 39 controls operations of the throttle valves 7 and 11, the EGR valves 8 and 12, the turbocharger 9, and the on-off valve 29 in accordance with detection signals from a variety of sensors including the boost sensor 38.

During drive of the engine 36, in particular when the low-pressure EGR device 25 is used, a large amount of condensation water is produced at the exit of the intercooler 10. The produced condensation water is fed to the portion of the exhaust pipe 5 positioned near the NOx trap catalyst 18 on the upstream side of the NOx trap catalyst 18 through the water drainage pipe 28 and discharged to the outside of the vehicle through the catalyst converter 19. When the on-off valve 29 disposed midway along the water drainage pipe 28 is closed, the condensation water is stored in the water drainage pipe 28. The on-off valve 29 is opened in accordance with the valve opening instruction from the control means 39 when the amount of the stored condensation water has reached a certain amount in accordance with the water level sensor (not illustrated) provided in the water drainage pipe 28 or when the travel distance or a period of drive time of the engine 36 has reached a certain value. In this way, the condensation water in the water drainage pipe 28 is discharged to the outside of the vehicle through the catalyst converter 19.

Here, the embodiment of the present invention is described. According to the above description, the opening and closing control of the on-off valve 29 provided in the water drainage pipe 28 is performed by the control means 39. However, when a failure of the on-off valve 29 occurs due to, for example, clogging with foreign matter or damage to the on-off valve 29, the opening and closing control by the control means 39 cannot be performed and a trouble occurs. Here, failure determination control that determines whether or not a failure of the on-off valve 29 occurs is described below as the embodiment of the present invention.

When the valve opening instruction is transmitted by the control means 39 while the on-off valve 29 is closed, as represented by a broken line of Fig. 18, a detection value of the boost sensor 38 is gradually changed from a steady state value to the low-pressure side due to outflow of the condensation water caused by the opening of the valve. When the condensation water has been completely drained from the water drainage pipe 28 after the specified period of time has elapsed, the detection value of the boost sensor 38 is changed further to the low-pressure side due to outflow of the intake air into the exhaust pipe 5 through the water drainage pipe 28. When the valve closing instruction is transmitted from the control means 39, due to stoppage of the outflow of the intake air caused by the closing of the valve, the detection value of the boost sensor 38 is changed to the high-pressure side and returned to the steady state value. However, when the on-off valve 29 is stuck closed for some reason, that is, the on-off valve 29 is not released from the closed state, as represented by a solid line of Fig. 18, the detection value of the boost sensor 38 is not changed from the steady state value even after the specified period of time has been elapsed.

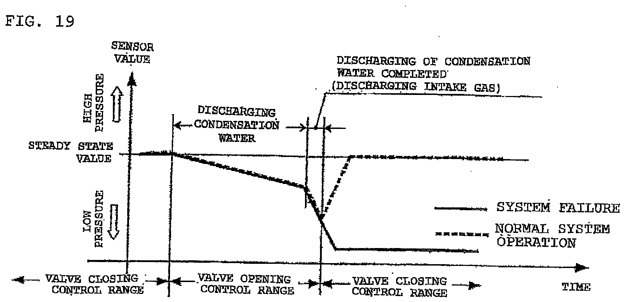

When the valve closing instruction is transmitted by the control means 39 while the on-off valve 29 is open, due to stoppage of the outflow of the intake air caused by the closing of the valve, as represented by a broken line of Fig. 19, the detection value of the boost sensor 38 is changed to the high-pressure side and returned to the steady state value. However, when the on-off valve 29 is stuck open for some reason, that is, the on-off valve 29 in the open state is not closed, as indicated by a solid line of Fig. 19, the detection value of the boost sensor 38 is not returned from the low-pressure side to the steady state value.

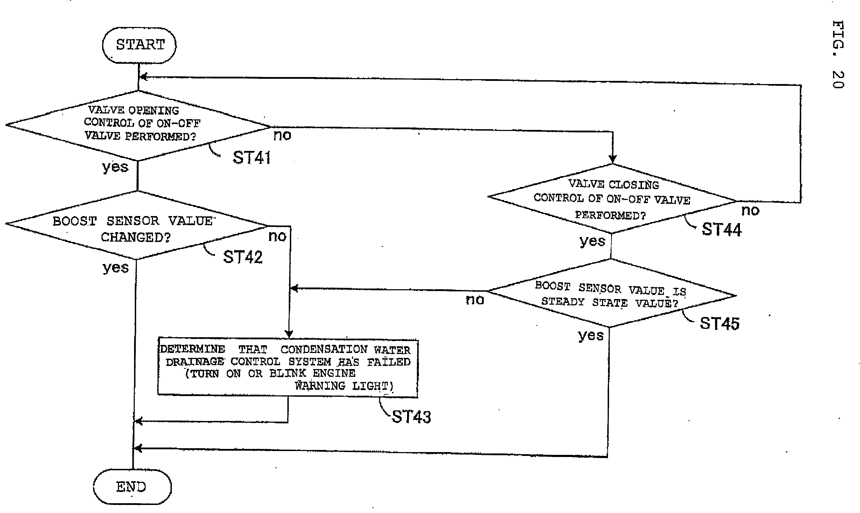

A control operation according to the above-described embodiment is described with reference to a flowchart of Fig. 20. Initially, whether or not the valve opening control of the on-off valve 29 has been performed is determined by the control means 39 (ST41). If it is determined that the valve opening control has been performed, then whether or not the detection value of the boost sensor 38 has been changed is determined (ST42). If it is determined that the detection value of the boost sensor 38 has been changed, it is recognized as normal and the control operation ends. If it is determined that the detection value has not been changed, then it is determined that a failure of the on-off valve 29 occurs, and the engine warning light is caused to turn on or blink so as to warn the driver about the occurrence of the failure (ST43).

Furthermore, if it is determined that the valve opening control has not been performed in step ST41, then whether or not the valve closing control has been performed is determined by the control means 39 (ST44). If it is determined that the valve closing control has been performed, then whether or not the detection value of the boost sensor 38 is the steady state value is determined (ST45). If it is determined that the detection value of the boost sensor 38 is the steady state value, it is recognized as normal and the control operation ends. If it is determined that the detection value is not the steady state value, then processing advances to step ST43. At step ST43, it is determined that a failure of the on-off valve 29 occurs, and the engine warning light is caused to turn on or blink so as to warn the driver about the occurrence of the failure.

According to the present embodiment, the control means 39 functions as a third failure determination control unit. With this structure, failure determination of the on-off valve 29 can be performed without providing an additional sensor. Accordingly, the failure determination of the on-off valve 29 can be correctly performed without increasing the cost.

According to the embodiment, when it is determined by the control means 39 functioning as the third failure determination control unit that the on-off valve 29 is in the stuck closed state, the control means 39 causes the opening of the low-pressure EGR valve 8 to be decreased or causes the low-pressure EGR valve 8 to be closed so as to decrease the exhaust flow amount of the low-pressure EGR device 25. Although the condensation water is not discharged from the water drainage pipe 28 because the on-off valve 29 is stuck closed, the amount of the condensation water produced in the intercooler 10 can be decreased due to the decrease in the exhaust flow amount. In this case, the control means 39 functions as an exhaust gas recirculation control unit.

Also according to the embodiment, when it is determined by the control means 39 functioning as the third failure determination control unit that the on-off valve 29 is stuck open, the control means 39 causes the flow amount of the intake air of the turbocharger 9 to decrease. When the amount of air in the exhaust gas increases because the on-off valve 29 is stuck open, the NOx trap catalyst 18 is unlikely to serve as a reducing atmosphere. Accordingly, it is required that more fuel be injected. In order to prevent this, the flow amount of the intake air of the turbocharger 9 is decreased. In this case, the control means 39 functions as a supercharger control unit.

### Reference Signs List

1, 33, 36 internal combustion engine (engine)
4 intake passage (intake pipe)
5 exhaust passage (exhaust pipe)
9 supercharger (turbocharger)
10 intercooler
16 exhaust filter (filter device)
18 catalyst (NOx trap catalyst)
20 detection means (oxygen concentration sensor)
25 exhaust gas recirculation device (low-pressure EGR device)
28, 31 water drainage line (water drainage pipe)
29, 32 on-off valve
30 on-off valve control unit, first failure determination control unit (control means)
34 detection means (temperature sensor)
35 on-off valve control unit, second failure determination control unit (control means)
38 detection means, pressure detection means (boost sensor)
39 on-off valve control unit, third failure determination control unit, exhaust gas recirculation control unit, supercharger control unit (control means)

## Claims

1. A control device for an internal combustion engine (1) comprising:
an intake passage (4) having one end connected to an intake side of an internal combustion engine (1);
an exhaust passage (5) having one end connected to an exhaust side of the internal combustion engine (1);
an intercooler (10) disposed in the intake passage (4);
a catalyst (18) provided in the exhaust passage (5);
an exhaust gas recirculation device (25) that is connected to the exhaust passage (5) and the intake passage (4) and that returns part of the exhaust to the intake passage (4);
a water drainage line (28) that has one end connected to a portion of the intake passage (4) downstream of the intercooler (10), that has another end connected to a portion of the exhaust passage (5) upstream of the catalyst (18), and that allows condensation water condensed by the intercooler (10) to be discharged therethrough to the exhaust passage (5);
an on-off valve (29) provided midway along the water drainage line (28);
detection means (20) that is provided in at least one of the intake passage (4) and the exhaust passage (5) and that detects at least one of a state of intake air and a state of exhaust; and
an on-off valve control unit (30) that performs opening and closing control of the on-off valve (29) in accordance with output of the detection means (20);
a failure determination control unit (30) that performs failure determination of the on-off valve (29) in accordance with a change in the state of the intake air or a change in the state of the exhaust detected by the detection means (20), and
an exhaust gas recirculation control unit (39) that controls a flow amount of the exhaust of the exhaust gas recirculation device (25),
wherein, when opening control of the on-off valve (29) is performed while the on-off valve (29) is closed, the failure determination control unit (30) determines that the on-off valve (29) is stuck closed in the case where the state of the intake air or the state of the exhaust detected by the detection means (20) is not changed after a specified period of time has elapsed,
wherein the exhaust gas recirculation device (25) returns the part of the exhaust to a portion of the intake passage (4) upstream of the intercooler (10) from a portion of the exhaust passage (5) between an exhaust filter (16) provided in the exhaust passage (5) and a connecting position of the water drainage line (28), and
wherein the exhaust gas recirculation control unit (39) causes the flow amount of the exhaust to decrease when the failure determination control unit (30) determines that the on-off valve (29) is stuck closed.

2. The control device for an internal combustion engine (1) according to Claim 1,
wherein, when closing control of the on-off valve (29) is performed while the on-off valve (29) is open, the failure determination control unit (30) determines that the on-off valve (29) is stuck open in the case where the state of the intake air or the state of the exhaust detected by the detection means (20) is not changed.

3. The control device for an internal combustion engine (1) according to Claims 1 or 2, further comprising:
a supercharger (9) provided upstream of the intercooler (10) in the intake passage (4); and
a supercharger control unit (39) that controls a flow amount of the intake air of the supercharger (9),
wherein the supercharger control unit (39) causes the flow amount of the intake air to decrease when the failure determination control unit (30) determines the on-off valve (29) is stuck open.

## Patentansprüche

1. Steuerungsvorrichtung für einen Verbrennungsmotor (1), aufweisend: einen Ansaugkanal (4), dessen eines Ende mit einer Ansaugseite eines Verbrennungsmotors (1) verbunden ist;
einen Abgaskanal (5), dessen eines Ende mit einer Abgasseite des Verbrennungsmotors (1) verbunden ist;
einen Ladeluftkühler (10), der in dem Ansaugkanal (4) angeordnet ist;
einen Katalysator (18), der in dem Abgaskanal (5) angeordnet ist;
eine Abgasrückführungsvorrichtung (25), die mit dem Abgaskanal (5) und dem Ansaugkanal (4) verbunden ist und einen Teil des Abgases zum Ansaugkanal (4) zurückführt;
eine Wasserabführungsleitung (28), deren eines Ende mit einem hinter dem Ladeluftkühler (10) liegenden Teil des Ansaugkanals (4) und deren anderes Ende mit einem vor dem Katalysator (18) liegenden Teil des Abgaskanals (5) verbunden ist und die ein Ableiten von Kondenswasser, das vom Ladeluftkühler (10) kondensiert wird, durch sich hindurch zum Abgaskanal (5) gestattet;
ein Ein-Aus-Ventil (29), das auf halbem Wege in der Wasserabführungsleitung (28) vorgesehen ist;
eine Erkennungseinrichtung (20), die mindestens entweder im Ansaugkanal (4) oder im Abgaskanal (5) vorgesehen ist und mindestens entweder einen Ansaugluftzustand oder
einen Abgaszustand erkennt; und
eine Ein-Aus-Ventilsteuereinheit (30), die das Öffnen und Schließen des Ein-Aus-Ventils (29) entsprechend der Ausgabe der Erkennungseinrichtung (20) steuert;
eine Fehlerbestimmungssteuereinheit (30), die eine Fehlerbestimmung des Ein-Aus-Ventils (29) entsprechend einer von der Erkennungseinrichtung (20) erkannten Änderung des Ansaugluftzustands oder Änderung des Abgaszustands durchführt, und
eine Abgasrückführungssteuereinheit (39), die eine Flussmenge des Abgases durch die Abgasrückführungsvorrichtung (25) regelt,
wobei dann, wenn eine Öffhungssteuerung des Ein-Aus-Ventils (29) durchgeführt wird, während das Ein-Aus-Ventil (29) geschlossen ist, die Fehlerbestimmungssteuereinheit (30) feststellt, dass das Ein-Aus-Ventil (29) in dem Fall in geschlossener Stellung klemmt, wenn sich der von der Erkennungseinrichtung (20) erkannte Ansaugluftzustand oder Abgaszustand nach Ablauf eines bestimmten Zeitraums nicht geändert hat,
wobei die Abgasrückführungsvorrichtung (25) den Teil des Abgases aus einem zwischen einem Abgasfilter (16), das in dem Abgaskanal (5) angeordnet ist, und einem Anschlusspunkt der Wasserabführungsleitung (28) liegenden Teil des Abgaskanals (5) zu einem vor dem Ladeluftkühler (10) liegenden Teil des Ansaugkanals (4) zurückführt, und
wobei die Abgasrückführungssteuereinheit (39) eine Verringerung der Flussmenge des Abgases bewirkt, wenn die Fehlerbestimmungssteuereinheit (30) feststellt, dass das Ein-Aus-Ventil (29) in geschlossener Stellung klemmt.

2. Steuerungsvorrichtung für einen Verbrennungsmotor (1) nach Anspruch 1,
wobei dann, wenn eine Schließsteuerung des Ein-Aus-Ventils (29) durchgeführt wird, während das Ein-Aus-Ventil (29) geöffnet ist, die Fehlerbestimmungssteuereinheit (30) feststellt, dass das Ein-Aus-Ventil (29) in dem Fall in offener Stellung klemmt, wenn sich der von der Erkennungseinrichtung (20) erkannte Ansaugluftzustand oder Abgaszustand nicht geändert hat.

3. Steuerungsvorrichtung für einen Verbrennungsmotor (1) nach Anspruch 1 oder 2, ferner aufweisend:
einen vor dem Ladeluftkühler (10) im Ansaugkanal (4) vorgesehenen Turbolader (9); und
eine Turbolader-Steuereinheit (39), die eine Flussmenge der Ansaugluft des Turboladers (9) regelt,
wobei die Turbolader-Steuereinheit (39) eine Verringerung der Flussmenge der Ansaugluft bewirkt, wenn die Fehlerbestimmungssteuereinheit (30) feststellt, dass das Ein-Aus-Ventil (29) in offener Stellung klemmt.

## Revendications

1. Dispositif de commande pour un moteur à combustion interne (1) comprenant :
un passage d'admission (4) ayant une extrémité reliée à un côté admission d'un moteur à combustion interne (1) ;
un passage d'échappement (5) ayant une extrémité reliée à un côté échappement du moteur à combustion interne (1) ;
un refroidisseur intermédiaire (10) disposé dans le passage d'admission (4) ;
un catalyseur (18) disposé dans le passage d'échappement (5) ;
un dispositif de recirculation de gaz d'échappement (25) qui est relié au passage d'échappement (5) et au passage d'admission (4) et qui renvoie une partie de l'échappement au passage d'admission (4) ;
un conduit de vidange d'eau (28) qui a une extrémité reliée à une partie du passage d'admission (4) en aval du refroidisseur intermédiaire (10), qui a une autre extrémité reliée à une partie du passage d'échappement (5) en amont du catalyseur (18), et qui permet à l'eau de condensation condensée par le refroidisseur intermédiaire (10) d'être évacuée par le biais de celui-ci jusqu'au passage d'échappement (5) ;
une vanne à deux voies (29) prévue à mi-chemin le long du conduit de vidange d'eau (28) ;
un moyen de détection (20) qui est prévu dans au moins l'un du passage d'admission (4) et du passage d'échappement (5) et qui détecte au moins l'un d'un état d'air d'admission et d'un état d'échappement ; et
une unité de commande de vanne à deux voies (30) qui réalise une commande d'ouverture et de fermeture de la vanne à deux voies (29) selon une grandeur de sortie du moyen de détection (20) ;
une unité de commande de détermination de défaut (30) qui réalise une détermination de défaut de la vanne à deux voies (29) selon un changement dans l'état de l'air d'admission ou un changement dans l'état de l'échappement détecté par le moyen de détection (20), et
une unité de commande de recirculation de gaz d'échappement (39) qui commande une quantité d'écoulement de l'échappement du dispositif de recirculation de gaz d'échappement (25),
où, quand une commande d'ouverture de la vanne à deux voies (29) est réalisée tandis que la vanne à deux voies (29) est fermée, l'unité de commande de détermination de défaut (30) détermine que la vanne à deux voies (29) est bloquée dans la position de fermeture dans le cas où l'état de l'air d'admission ou l'état de l'échappement détecté par le moyen de détection (20) n'est pas changé après qu'une période de temps spécifiée se soit écoulée,
où le dispositif de recirculation de gaz d'échappement (25) renvoie la partie de l'échappement à une partie du passage d'admission (4) en amont du refroidisseur intermédiaire (10) depuis une partie du passage d'échappement (5) entre un filtre d'échappement (16) prévu dans le passage d'échappement (5) et une position de liaison du conduit de vidange d'eau (28), et
où l'unité de commande de recirculation de gaz d'échappement (39) amène la quantité d'écoulement de l'échappement à diminuer quand l'unité de commande de détermination de défaut (30) détermine que la vanne à deux voies (29) est bloquée dans la position de fermeture.

2. Dispositif de commande pour un moteur à combustion interne (1) selon la revendication 1,
où, quand une commande de fermeture de la vanne à deux voies (29) est réalisée tandis que la vanne à deux voies (29) est ouverte, l'unité de commande de détermination de défaut (30) détermine que la vanne à deux voies (29) est bloquée dans la position d'ouverture dans le cas où l'état de l'air d'admission ou l'état de l'échappement détecté par le moyen de détection (20) n'est pas changé.

3. Dispositif de commande pour un moteur à combustion interne (1) selon la revendication 1 ou 2, comprenant en outre :
un suralimenteur (9) prévu en amont du refroidisseur intermédiaire (10) dans le passage d'admission (4) ; et
une unité de commande de suralimenteur (39) qui commande une quantité d'écoulement de l'air d'admission du suralimenteur (9),
où l'unité de commande de suralimenteur (39) amène la quantité d'écoulement de l'air d'admission à diminuer quand l'unité de commande de détermination de défaut (30) détermine que la vanne à deux voies (29) est bloquée dans la position d'ouverture.
